# EUROPÄISCHE PATENTSCHRIFT

(11) **EP 1 617 554 B1**
(45) Veröffentlichungstag und Bekanntmachung des Hinweises auf die Patenterteilung: **24.06.2009**
(21) Anmeldenummer: 05014606.7
(22) Anmeldetag: 06.07.2005
(51) Int. Cl.: H02P 7/00

(54) **Kommutierungssteuerung für einen geschalteten Reluktanzmotor**
Commutation control for a switched reluctance motor
Unité de commande de la commutation pour un moteur à reluctance commuté

(30) Priorität: 15.07.2004 DE 102004034470
(43) Veröffentlichungstag der Anmeldung: 18.01.2006
(73) Patentinhaber: Elektra GmbH, 96526 Schalkau (DE)
(72) Erfinder: Schwamberger, Frank, 98553 Schleusingen (DE); Horn, Stephan, 98746 Mellenbach-Glasbach (DE)
(74) Vertreter: Creutz, Dieter

(56) Entgegenhaltungen:
- EP-A- 0 534 761
- US-A- 4 707 650
- US-A- 5 113 125
- INDERKA R B ET AL: "DITC- direct instantaneous torque control of switched reluctance drives" CONFERENCE RECORD OF THE 2002 IEEE INDUSTRY APPLICATIONS CONFERENCE. 37TH IAS ANNUAL MEETING . PITTSBURGH, PA, OCT. 13 - 18, 2002, CONFERENCE RECORD OF THE IEEE INDUSTRY APPLICATIONS CONFERENCE. IAS ANNUAL MEETING, NEW YORK, NY : IEEE, US, Bd. 1 OF 4. CONF. 37, 13. Oktober 2002 (2002-10-13), Seiten 1605-1609, XP010610094 ISBN: 0-7803-7420-7
- STEPHENSON J M BLAKE R J: "THE CHARACTERISTICS, DESIGN AND APPLICATION OF SWITCHED RELUCTANCE MOTORS AND DRIVES" PCIM EUROPE PROCEEDINGS OF THE INTERNATIONAL INTELLIGENT MOTION CONFERENCE, XX, XX, Bd. 5, 21. Juni 1993 (1993-06-21), Seiten 1-68, XP002956735

## Beschreibung

Die Erfindung betrifft eine Kommutierungssteuerung für einen geschalteten Reluktanzmotor, der in einem hochtourigen Drehzahlbereich gefahren wird.

Erwiesenermaßen hat die Steuerschaltung entscheidende Bedeutung für die optimale Ausschöpfung der dem Reluktanzmotor aus seinem Wirkprinzip innewohnenden Funktionseigenschaften. Erst die Möglichkeiten der elektronischen und digitalen Ansteuerung haben den Reluktanzmotor in der geschalteten Version wettbewerbsfähig gemacht.

Die Optimierung der Steuerung ist zu richten auf ein gesichertes und reproduzierbares Anlaufverhalten, auf die dynamische Anpassung der Bestromung in einem weiten Drehzahl- und Lastbereich sowie auf eine Geräuschreduzierung.

Die geometrisch typische Gestaltung von Stator und Rotor und insbesondere ihre Polzahl-Relationen dürfen als inzwischen allgemein bekannt vorausgesetzt werden.

Die Winkelschritte des Rotors werden bekanntlich erzeugt, indem durch Stromeinspeisung ein Statorpol ein Magnetfeld ausbildet in das er einen nicht zu ihm ausgerichteten Rotorpol mittels eines geschlossenen Magnetflusses einbindet, wobei das System eine durch minimale Reluktanz gekennzeichnete stabile Ausrichtposition von Stator-und Rotorpol einzunehmen sucht und so den Drehschritt bewirkt.

Durch rechtzeitige Abschaltung der Statorpolwicklung und Bestromung der in Drehrichtung nächstgelegenen Wicklung wird der Rotor jedoch über die Ausrichtposition hinaus ungebremst weiter bewegt und durch zyklische Wiederholung des Effektes in eine kontinuierliche Rotation versetzt.

Die Stromzu- und -abschaltung in den Statorpolwicklungen muß abgestimmt auf die Geometrie der Stator- und Rotorpolanordnung durch eine Steuerschaltung zwischen Motor und Stromversorgung ausgeführt werden, die dazu rotationssynchrone Informationssignale über die momentane Rotorposition und die Drehzahl verarbeitet.

Abhängig von der geometrischen und elektromagnetischen Auslegung des Reluktanzmotors benötigt ein Rotorwinkelschritf einen ausreichenden Stromimpuls nach Stärke und Dauer, der durch Anstiegsflanke, Haltezeit Maximalstrom und Abklingzeit beschrieben werden kann.

Die erforderliche Zeitdauer des Impulses ist dabei weitgehend systemgebunden, die verfügbare Zeitspanne während des Rotorwinkelschrittes verringert sich jedoch mit zunehmender Drehzahl.
Ohne geeignete kompensierende Maßnahmen kann es daher bei Drehzahlsteigerung über einen systemspezifischen Wert hinaus zu einer Überlappung aufeinander folgender Stromimpulse kommen und zum Entstehen von Bremskraftanteilen im Bewegungsablauf des Rotors.

Es ist deshalb allgemein bekannt und üblich, die geschalteten Reluktanzmotoren mit unterschiedlicher Ansteuerung in einem unteren und einem oberen Drehzahlbereich zu betreiben.

Die Steuerung gewinnt in den meisten bekannt gewordenen Lösungsvarianten die aktuellen Situationsinformationen aus einem geeigneten Rotorlagegeber und einem zusätzlich gewonnenen oder abgeleiteten Drehzahlsignal und wechselt bei Passieren der Bereichsschwelle entsprechend den Bestromungsmodus.

Im unteren Drehzahlbereich bewährt sich das Zu-und Abschalten der aufeinander folgenden Phase der Statorwicklung durch ein Puls-Weiten-Modulations-Signal (PWM-Signal) mit einem konstanten Tastverhältnis.

Ab der vorstehend erwähnten systemspezifischen Schwellenwert Drehzahl geht man in den anderen Bestromungsmodus über, bei dem die Stromimpulslage und -dauer angepaßt getaktet wird.

Diesen Bestromungsmodus der Motorsteuerung im oberen Drehzahlbereich bis zu sehr hohen Drehzahlen zu lösen gibt es unterschiedliche Vorschläge.

So wird in der DE 40 29 335 vorgeschlagen, das für den niedrigen Drehzahlbereich angewendete Impulsfolgemuster dahingehend abzuwandeln, daß in deren zyklischer Reihenfolge bestimmte Stromimpulse ausgelassen werden, d.h. daß die entsprechenden Wicklungen an dieser Rotorposition nicht mit Strom gespeist werden. Damit steht für jeden verbleibenden Stromimpuls ein größerer Drehwinkelabschnitt des Rotors zur Verfügung ohne daß es zu einer Impulsüberlappung und zu Bremsmomenterscheinungen kommt.
Zusätzlich verlängert man die Impulsdauer durch Vorverlegung ihres Beginns jedoch unter Beibehaltung ihres Abschaltpunktes.
Die aktuellen Situationsinformationen gewinnt man wie vorstehend bereits beschrieben aus der Verwendung eines Rotorlagegebers und abgeleiteter Drehzahlwerte.

Die DE 100 35 540 bezeichnet die steuerungstechnische Lösung für den oberen Drehzahlbereich als Stromhysterese- Regelverfahren. Anders als beim normalen Pulsweiten-Modulationsverfahren mit seinem wechselnden Anlegen positiver und negativer Impulse mit entsprechendem Taktverhältnis zur Einstellung der gewünschten Stromhöhe wird beim Stromhysterese- Regelverfahren ein Strom definierter Höhe eingeprägt, indem die positive Spannung so lange auf die Spule geschaltet wird, bis ein Maximalwert überschritten wird.
Danach erfolgt die Nachregelung durch abwechselndes Ein- und Ausschalten der Spannung.

Auch die EP 0534 761 A1 beschreibt die unterschiedlichen Steuerungsbedingungen bei niedriger und hoher Drehzahl und spricht von drei Drehzahlbereichen mit spezifischen Steuerungserfordernissen. Ausgehend von einem Generator als Anwendungsfall werden Erkenntnisse und Lösungswege dann verallgemeinert. Im oberen Drehzahlbereich möchte man den Dauerstrom- oder Einzel- Puls- Mode anwenden und bedient sich dabei erfindungsgemäß einer Regelungsschaltung für die Ein- und Ausschaltzeitpunkte bzw. - winkel, derart, dass man sie während des Betriebes dynamisch optimiert.

Jede Variante eines Bestromungsmodus ist - wie schon ausgeführt - darauf angewiesen, die momentane Rotorposition in Bezug auf die zyklisch und rotatorisch zu passierenden Statorpole zu erfassen und auszuwerten und dies nicht in einem statischen Zustand sondern in einem dynamischen Vorgang.

Signalgewinnung und Signalverarbeitung sind damit wichtige Funktionen in der Steuerung eines geschalteten Reluktanzmotors.

Die Erfassung der momentanen Rotorposition dient der Gewinnung der Ein- und Ausschaltbefehle zum zyklischen Bestromen der am Statorumfang angeordneten Wicklungsphasen. Da Stator und Rotor einen nach Polwinkelteilung und Polgeometrie in der Regel symmetrischen Aufbau haben kann man die Rotorposition an einer beliebigen Stelle des Umfangs gewinnen, die Aussage hat Gültigkeit für alle anderen Stellungen am Umfang für jede momentane Paarungslage der Stator- und Rotorpole.

Die Abtastzone eines Sensors wird von dem rotierenden Rotor durchlaufen, wobei sich zyklisch aus der Folge von Polbereichen und Lücken funktionsspezifische Ja- Nein- Signale des Sensors ergeben. Berührungslos arbeitende Sensoren wie Lichtschranken und Hallsensoren haben sich hierzu eingeführt.

Anfangs hat man die Direktabtastung der Rotorstirnseite favorisiert mit der Begründung, so die originären Stellungswerte zu erfassen und etwaige Montage-Versatzfehler von Geberscheiben auszuschließen.

Diese Geberscheiben lassen sich mit Abtastmustern versehen, die die Ja- Nein- Signale des jeweiligen Sensortyps auslösen, meist Löcher oder Aussparungen im Wechsel mit optisch oder magnetisch rückwirkenden Sektoren.

Diese Abtastmuster auf Kreisbahnen mit ihren sensorauslösenden Grenzkanten kann man nun abweichend von der Rotorgeometrie, jedoch in funktionsgerechter Relation zu ihr und der Bestromungsfolge ausführen.

Anfangs hat man mehrere konzentrische Bahnen benutzt, nach Anzahl zum Beispiel so viele wie es Wicklungsphasen gab. Der Sensoraufwand war entsprechend hoch und dennoch hatte man nur eine Diskriminante und eigentlich keinen kreisumfangs-zyklischen Kontrolltakt.

Schon für den Anlauf des Motors mit Rotorausrichtung und Sicherung der beabsichtigten Drehrichtung stieß man rasch an Grenzen und mußte umständliche Kompensationsmaßnahmen treffen.
Das gilt auch für den Versuch, mit zusätzlichen Signalaufbereitungszweigen gänzlich auf Geberscheiben zu verzichten, indem Spannungs-Nulidurchgönge als Signal einer zyklischen Abfrageschaltung gewonnen werden, wie sie DE 40 25 350 A1 enthält.

Die vorstehend zitierten und weitere Patentschriften mit nur tangierender Aussage verstehen unter oberem oder sehr hohem Drehzahlbereich ersichtlich nicht extrem zu nennende Drehzahlen von einigen Zehntausend Umdrehungen pro Minute.

Wird beispielsweise ein geschalteter Reluktanzmotor in der häufig ausgeführten Polzahl-Kombination 6 / 4 für Stator / Rotor mit bis zu 15 000 min⁻¹ betrieben, dann wird jeder der Rotorpole während einer Umdrehung an den sechs Statorpolen einer ebensolchen Anzahl von Kommutierung genannten Umsteuerungen bzw. Umordnungen ausgesetzt, womit sich eine Kommutierungsfrequenz von 3 kHz ergibt.

Der angepaßte Bestromungsmodus im höheren Drehzahlbereich erfordert eine sog. Frühzündung durch Zündwinkelverschiebung.
Die bisher vorgeschlagenen Lösungen hierfür sehen nur statische Festbetröge vor, eine fließende Zündwinkelverschiebung ist nicht möglich.

Dies erfordert unter den oben erläuterten Bedingungen der steuerungstechnischen Reaktionsfähigkeit eine besonders geeignete Bestromungsläsung.

Unbefriedigend auch die vorgefundenen Ausführungen der Rotorlagegeber-Scheiben und ihrer Abtastspurmuster. Zu hohe Sensoranzahl und/oder fehlende Grundzyklus-Kontrolle bedürfen einer verbesserten Konzeption.

Ein weiterer Nachteil des vorgefundenen Standes der Technik ist, daß das Ausrichten des Rotors beim Anlauf unbefriedigend oder sehr aufwändig gelöst wird.

Ein zuverlässiges und präzises Ausrichten ist Voraussetzung für einen sicheren Anlauf. Dabei muß auch die Anlaufenergie groß genug sein, um systembedingte mechanische Reibungen und Masseträgheiten zu überwinden. Ist diese Anlaufenergie wiederum zu groß, so ergibt sich eine Schwingungsanregung für den Rotor und dieser nimmt nicht die definierte Rotorposition ein. Auch führt eine Schwingbewegung des Rotors nach dem Abschalten des Ausrichtmotorstranges zu einer weiteren undefinierten Rotorbewegung. Der Rotor befindet sich also dann nicht sicher in der definierten Startposition.

Eine dritte bereits eingangs erwähnte Aufgabe der Steuerung besteht in Maßnahmen zur Geröuschreduzierung. Bei geschalteten Reluktanzmotoren ergeben sich aus der Bestromung gegenüberliegender Statorpole hohe radiale Magnetkräfte und aus dem zyklischen Umlauf dieser paarweisen Bestromung schwingungserzeugende umlaufende ellliptische Kraftwellen. Sie verursachen deformationsbedingte Geräusche. Dies ist auch in der DE 102 45 887 A1 erkannt und beschrieben mit der vorschlagsgemäßen Schlußfolgerung, durch die Ansteuerelektronik die Phasenströme derart vorzugeben, daß im Radialkraftspektrum des Motors im Bereich kritischer Resonanzfrequenzen Radialkraftanteile minimiert werden. Nur beschränkt sich der Lösungsanspruch auf die naheliegende allgemeine steuerungstechnische Vorgehensweise.

Aus der Fachliteratur, **(AHN Jin- Woo (u.a.): DSP- Based High Efficiency SR Drive with Preciese Speed Control In: Industrial Electronics, Proceedings ISIE 2002, Vol. 4.8. -11. July 2002, Seite** 1125 - 1130) ist eine Lösung bekannt, die eine Steuerung eines geschalteten Reluktanzmotors mit einem Positionsgeber, dessen Ausgangssignal durch eine PLL-Struktur geführt wird, zeigt.
Die PLL- Struktur ist dabei Teil einer Regelung der Kommutierungsperioden.

Nachteil dieser Lösung ist, dass diese Steuerung nicht geeignet ist, den Reluktanzmotor im hochtourigen Bereich zu fahren.

Aufgabe der Erfindung ist es daher, eine Steuerung für einen geschalteten Reluktanzmotor zu erhalten, die eine zuverlässige Ausrichtung des Rotors auf Startposition beim Anlauf gewährleistet, auch Kommutierungsfrequenzen von einigen kHz zuläßt und eine wirksame Geräuschminderung ergibt.

Erfindungsgemäß wird das sichere Anlaufen des Motors aus jeder Ruhelage durch Ausrichten des Rotors mittels einer angepaßten Bestromung gesichert.

Bei 3-phasigen SR-Motoren mit 6 Stator- und 4 Rotorzähnen ist durch die konstruktive Gestaltung der Zahnwinkel eine Rotorstellung möglich, bei der es keine Zahnüberdeckung gibt. In dieser unausgerichteten Stellung ist das Drehmoment minimal (theoretisch gleich Null). Diese Stellung ist insbesondere beim Ausrichtvorgang zu beachten.

Das Ausrichten des SR-Motors muß aus jeder Rotorstellung des Motors erfolgen können und dies schnell und stabil.

Die erfindungsgemäße Lösung gewährleistet die sichere Ausrichtung des SR-Motors bei minimierter Ausrichtdauer.

Die Steuerung und der Leistungskreis sind dazu so ausgelegt, daß zwei Motorstränge unabhängig voneinander bestromt werden können. Der Strom durch die Wicklungen des Motors wird während des gesamten Ausrichtevorgangs geregelt (PI-Regier)

Unter der Annahme, dass die Strangfolge für die gewünschte Drehrichtung A - B - C ist, und der Anlauf mit dem Motorstrang A beginnen soll, ist ein Ausrichten des Rotors auf den Motorstrang C erforderlich. Um ein sicheres Ausrichten des Rotors in jeder Stellung zu gewährleisten, wird nun zuerst der Motorstrang B für eine kurze Zeit bestromt (ca. 1/5 der Gesamtausrichtzeit). Der Stromsollwert für dieses Vorausrichten wird separat eingestellt und als Rampenfunktion ausgeführt. Die Stromregelschleife wird während des Ausrichtvorganges mit adaptierten Regelparametern berechnet, da in diesem Betriebszustand des Motors noch keine Gegenspannungen wirksam sind. Durch das Vorausrichten ist sichergestellt, dass der nachfolgende Ausrichtvorgang auf der Motorstrang C in einem Bereich mit Drehmomentbildung stattfindet. Dazu wird der Strom im Motorstrang B auf Null herabgeregelt und der Strom im Motorstrang C, wiederum über eine Rampenfunktion, auf den vorgegebenen Sollwert eingestellt. Dieser Sollwert kann entsprechend des aufzubringenden Lastmomentes zwischen 0 und 100% des Maximalstromes gewählt werden. Die Regelparameter für diesen Teil des Ausrichtvorgangs werden wiederum nachgeführt. Durch die Rampenfunktion wird ein Überschwingen des Rotors während des Ausrichtens vermindert und die Ausrichtzeit minimiert. Ein Überschwingen des Rotors würde nach Beendigung des Ausrichtvorganges dazu führen, dass der Rotor nicht die zum Anlaufen erforderliche sichere Ausgangsposition einnimmt. Weiterhin erfolgt vor dem Ende des Ausrichtvorganges (nach ca. 4/5 der Gesamtausrichtzeit) ein Absenken des Ausrichtstromes auf den halben Sollwert, wodurch eine weitere Stabilisierung des Rotors erzielt wird.

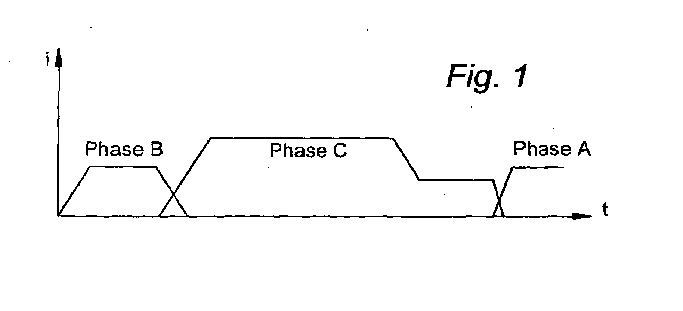

Besonderheiten der erfindungsgemäßen Anlauf-Steuerung sind unter Hinweis auf ***Fig. 1*** ***:***
- Vorausrichten auf einen der benachbarten Motorstränge zur Sicherung einer Zahnüberdeckung in der Ausrichtphase - Vermeidung des Nullmomentes beim Ausrichten
- Einstellen des Ausrichtstromes über Rampenfunktion zur Verringerung von Schwingungen am Rotor - stabiles Ausrichten als Voraussetzung für sicheres Anlaufen
- Stromregelung des Ausrichtstromes
- Absenken des Ausrichtstromes vor dem Beginn des Anlaufvorganges auf einen Haltestromwert zur weiteren Stabilisierung des Läufers

Die zweite erfindungsgemäße Zielstellung betrifft eine drehzahlabhängige Frühzündung und die Anpassung der Kommutierungszeitpunkte an die PWM- Trägerfrequenz.

Der zweispurige Rotorlagegeber sichert insbesondere in der Anlaufphase vorteilhaft die regelmäßige Kontrolle des Grundzyklus und das Erfassen der momentanen Motordrehzahl.
Ab einer bestimmten Drehzahl ist es aber nicht mehr ausreichend, den Motorstrang mit den Flanken des Phasensensors zu schalten. Es wird eine drehzahlabhängige Frühzündung notwendig, was als Erkenntnis zum Stand der Technik gehört.

Die Erfindung ist eine Lösung, welche, auch bei Einsatz einfacher Positionsgeber mit nur zwei Signalzuständen pro Kommutierungsintervall, eine hochgenaue drehzahlabhängige Zündimpulserzeugung garantiert. Zu diesem Zweck wird eine digitale PLL- Struktur eingesetzt, welche im hochtourigen Drehzahlbereich zwischen den Positionsgeber und die Kommutierungssteuerung geschalten ist, wobei aus dem diskreten Signal des Positionsgebers durch einen hochauflösenden Softwaretimer innerhalb der PLL- Struktur eine hochgenaue Auflösung der aktuellen Rotorposition gewonnen wird. Mittels dieses Softwaretimers werden durch Addition und Subtraktion drehzahl- und betriebsabhängiger Verschiebungszeiten die optimalen Zündimpulszeitpunkte eingestellt. Damit ist es gelungen, die für den Betrieb im hochtourigen Drehzahlbereich erforderliche Frühzündung unabhängig vom Zeitpunkt des Eintretens der Gebersignale zu gestalten. Das für den niedertourigen Drehzahlbereich optimierte Gebersignal bleibt erhalten und wird von der PLL als Eingangsgröße verarbeitet.

Neben der genauen drehzahlabhängigen Frühzündung schafft das erfindungsgemäße Verfahren eine Lösung, weitere betriebsabhängige Einflüsse des Motors dynamisch in die Zündimpulserzeugung zu implementieren und somit, durch die hochgenaue Verschiebung der Einschalt- und Ausschaltzeitpunkte, den Wirkungsgrad und den Drehmomentverlauf des Reluktanzmotors zu verbessern.

Im weiteren wird das Verfahren dazu benutzt, die Drehzahlkonstanz des Motors zu erhöhen, was durch eine Anpassung der Kommutierungsperiode an die PWM- Trägerfrequenz mittels Verschiebung der Einschalt- und Ausschaltzeitpunkte in beide Richtungen realisiert ist.

Da der SR-Motor immer an einem Umrichter betrieben wird, ist für die Drehzahlstellung des SR-Motors neben seiner Drehzahl-/Spannungs-Kennlinie und der Drehzahl-/ Drehmomenten-Charakteristik auch das Übertragungsverhalten des Umrichters von Bedeutung. Da dieser im schaltenden Betrieb arbeitet, wirken sich die Übertragungsfehler durch die Quantisierung und die Schaltverläufe in den Brückenzweigen ebenfalls auf die Drehzahl aus.

Das erfindungsgemäße Verfahren schafft eine Möglichkeit, die Drehzahlfehler, welche durch die Anwendung der Pulsweitenmodulation entstehen, zu verringern. Entsprechend der Strangzahl und der Rotorpolzahl des SR-Motors ergibt sich für jede Drehzahl eine exakte Zeitdauer in der eine Motorstrang des Motors eingeschalten sein soll. Nach dieser Zeit erfolgt die Kommutierung auf den nächsten Motorstrang des SR-Motors. Ist die PWM- Trägerfrequenz ein ganzzahliges Vielfaches dieser Kommutierungsperiode, so ist der Drehzahlregler in der Lage einen festen Sollwert auszugeben, der unter Berücksichtigung der Verluste im Umrichter zu einer konstanten Motorspannung führt. Verändert sich jedoch die Drehzahl des Motors, so wird die Kommutierung auch innerhalb eines PWM- Signals durchgeführt und der vom Drehzahlregler vorgegebene Sollwert kann vom Umrichter nicht mehr exakt eingestellt werden. Dies führt zu Schwankungen in der Drehzahl des SR-Motors.

Ziel der Erfindung ist es daher, den Kommutierungszeitpunkt so anzupassen, dass ein ganzzahliges Verhältnis zur PWM- Trägerfrequenz erhalten bleibt. Somit kann die statische Genauigkeit der Drehzahlregelung stark verbessert werden. Dazu wird die gemessene Dauer einer Kommutierungsperiode in eine digitale PLL- Struktur geführt und die drehzahlabhängige Periodendauer als Rechenwert ermittelt.
Zu diesem Zweck wird zuerst die Differenz zwischen dem Timer für die Messung der Kommutierungsperiode aus den Signalen der Positionssensoren und einem frei laufenden Softwaretimer gebildet. Diese wird anschließend gefiltert (PT1-Glied) und verstärkt (P-Glied).

Erfindungsgemäße Besonderheiten dieser Steuerungslösung sind :
- Digitale PLL zur Erhöhung der Auflösung der Positionsgebersignale für Generierung der Kommutierungszeitpunkte
- Anpassung der Kommutierungsperiode an die PWM- Trägerfrequenz durch Verschiebung des Ein-/ und Ausschaltzeitpunktes in beide Richtungen

Die dritte erfindungsgemäße Zielstellung betrifft die Geräuschreduzierung durch Regelung der Stromform im Kommutierungsbereich.

Ein wesentlicher Parameter zur Charakterisierung eines Motors ist dessen Geräuschentwicklung. Dies ist insbesondere bei SR-Motoren von Relevanz, da hier, infolge des Arbeitsprinzips, eine Verformung des Stators auftritt. Beim Zuschalten der Motorstränge werden die jeweils gegenüberliegenden Spulen bestromt. Durch die dabei auftretende Radialkraft am Stator wird dieser verformt. Zum Zeitpunkt des Abschaltens der Motorstränge ist der Rotorzahn zum Statorzahn weitgehend ausgerichtet. Deshalb ist zu diesem Zeitpunkt die Radialkraft am größten. Wird der Motorstrangstrom abgeschaltet, tritt durch den plötzlichen radialen Kraftabfall eine Rückverformung des Stators auf, die zu einer starken Geräuschbildung führt.

Um die für die Geräuschbildung verantwortliche plötzliche Rückverformung des Stators zu vermeiden, wird beim Abschalten des Motorstranges der Strom mit Hilfe einer Stromformregelung allmählich reduziert.
In der vorliegenden Realisierung zur Verminderung der Geräuschentwicklung an SR-Motoren wird die Stromform im Bereich des Kommutierungsvorganges eingestellt. Dazu wird die Periodendauer für eine Kommutierungsperiode des Motors gemessen und anschließend durch ein PTI-Glied gefiltert. Dieser Wert wird anschließend durch die Periodendauer der Stromregelschleife dividiert und als Ergebnis erhält man die Anzahl der Regelschritte pro Kommutierungsperiode. Mit diesem Wert, der zu Beginn einer Kommutierung übernommen und dann bei jeder Reglerberechnung dekrementiert wird, lässt sich aus einer Tabelle ein Korrekturfaktor für den Stromsollwert entnehmen. Durch die Multiplikation dieses Faktors mit dem Sollstrom (z. B. Ausgang des Drehzahlreglers) erhält man den Sollwert für den unterlagerten Stromregelkreis. Der Aufbau der Korrekturtabelle erfolgt optimalerweise in der Form, dass die normierten Faktoren im Bereich von +1 bis 0 (bzw. -1) abgelegt werden. Es werden außerdem nur die Werte für die letzten n Regelschritte (n=10) einer Kommutierungsperiode hinterlegt. Alle davor liegenden Faktoren werden mit +1 aus der Tabelle gelesen.
Damit beschrönkt sich die Größe der zu erstellenden Stromformtabelle und der Bereich für die Stromformregelung auf den Stromabbau vor der Kommutierung auf den nachfolgenden Motorstrang. Dieser Bereich ist für die Verringerung von Geräuschen im SR-Motor besonders wichtig, da durch den harten Stromabriss beim Ausschalten der noch aktive Motorstrang besonders starke Statorverformungen entstehen. Durch das gezielte Absenken des Motorstrangstromes vor der Kommutierung werden diese Geräusche stark vermindert.

Vorausetzung für die erfolgreiche Umsetzung der Stromformregelung ist die Realisierung einer Pulsweitenmodulation über den gesamten Drehzahlbereich des SR-Motors, sowie eine schnelle Berechnung der Stromregelalgorithmen (PI-Regler).
Außerdem kann im Bereich der Stromformkorrektur auch der untere Schalter des Brückenzweiges des abkommutierenden Motorstranges gepulst werden. Dies erfolgt, wenn der Stromsollwert negativ wird (Korrekturfaktoren 0 bis -1).
Der obere Schalter des Brückenzweiges ist dann ausgeschaltet. Dies ist insbesondere bei hohen Drehzahlen des SR-Motor vorteilhaft, um den geregelten Stromabbau schnell auszuführen. (Im Normalbetrieb des Motors bleibt der untere Schalter ansonsten dauerhaft eingeschalten, um die Stromwelligkeit gering zu halten, die Stromregelung erfolgt durch die Pulsung des oberen Schalters im Brückenzweig.)
Erfindungsgemäße Besonderheiten der Steuerung bezüglich dieser Aufgabe sind :
- Einstellung der Stromform beim Abschalten der Motorstränge zur Geräuschreduzierung
- Asymmetrische Schalteransteuerung innerhalb eines Brückenzweiges zur gezielten Beeinflussung des Stromes

Die erfindungsgemäße Steuerung wird anhand der beigefügten Zeichnungen Fig.1 bis Fig. 3 näher erläutert.
- **Fig. 1**: zeigt die prinzipielle Bestromungsfolge der Motorstränge beim Ausrichten und Anlauf
- **Fig. 2**: zeigt das Blockschaltbild der digitalen PLL Struktur
- **Fig. 3**: zeigt das Blockschaltbild für die Stromformregelung.

### Legende der darin aufgeführten Positionen:

- 1: Umrichter
- 2: SR - Motor
- 3: PWM Einheit
- 4: Drehzahl- Sollwert
- 5: Messtimer (Periodendauer u. Synchronisation)
- 6: Filter
- 7: digitale PLL- Struktur
- 8: Softwaretimer
- 9: Ausschaltkorrektur
- 10: Stromformtabelle
- 11: Drehzahlregler
- 12: Stromregler
- 13: Gebersignale
- 14: Strangfolge
- 15: Rotorlagegeber
- 16: Messverstörker
- 17: Strombegrenzung
- 18: Analog/ Digitalwandler
- 19: Abtastrate Stromregelung
- 20: Drehzahlberechnung

Die Komponenten der erfindungsgemäßen Steuerung wirken miteinander kombiniert an der Gesamtlösung.

**Fig. 1** zeigt ein Beispiel für Bestrornungsfolge für das stabile Ausrichten

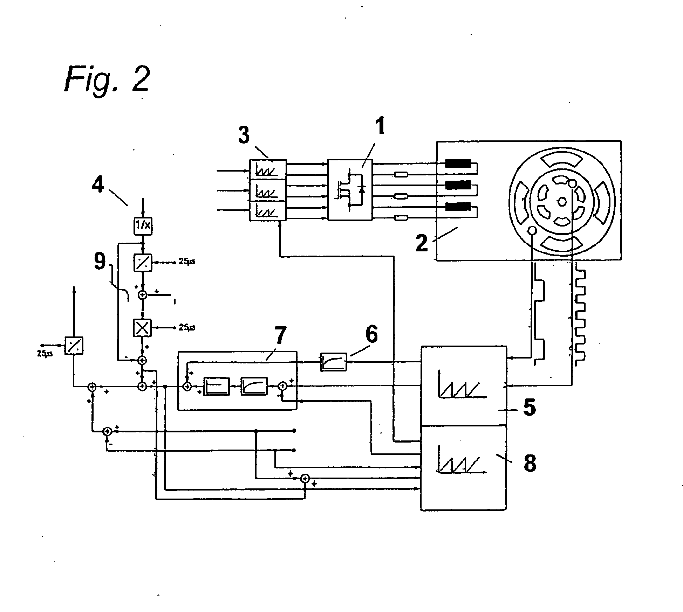

In **Fig. 2** ist mit **(1)** der Umrichter bezeichnet, an dem ein SR-Motor **(2)** stets betrieben wird. Für die Drehzahlstellung des SR-Motors (2) ist neben seiner Drehzahl-/Spannungs-Kennlinie auch das Übertragungsverhalten des Umrichters (1) von Bedeutung. Weil dieser im schaltenden Bereich arbeitet, wirken sich Übertragungsfehler durch die Quantisierung und die Schaltverläufe in den Brückenzweigen ebenfalls auf die Drehzahl aus.

Das erfindungsgemäße Verfahren liefert daher eine Möglichkeit, die Drehzahlfehler, welche durch die Anwendung der Pulsweitenmodulation **(3)** entstehen, zu verringern.
Entsprechend der Strangzahl und der Rotorzahnzahl des SR-Motors ergibt sich für jede Drehzahl eine exakte Zeitdauer, in der ein Motorstrang des Motors eingeschalten ist.
Nach dieser Zeit erfolgt die Kommutierung auf den nächsten Motorstrang des SR-Motors. Stellt sich dabei zwischen der Kommutierungsperiode eines Motorstranges und der Periodendauer der PWM- Trägerfrequenz ein ganzzahliges Vielfaches ein, so kann der vom Drehzahlregler vorgegebene Sollwert **(4),** unter Berücksichtigung der Verluste im Umrichter (1). zu einer konstanten Motorspannung umgesetzt werden. Unter Annahme einer konstanten Last am SR-Motor (2) stellt sich dann eine konstante Drehzahl ein. Verändert sich jedoch die Drehzahl des Motors, z.B. infolge eines neuen Sollwertes (4) oder einer Laständerung, so ist das Verhältnis zwischen PWM- Periode und Kommutierungsdauer nicht länger ganzzahlig. Die Kommutierung wird nun innerhalb eines PWM- Signals durchgeführt und der vom Drehzahlregler vorgegegebene Sollwert (4) kann vom Umrichter (1) nicht mehr exakt eingestellt werden. Dies führt zu Schwankungen in der Drehzahl des SR-Motors.

Ziel der Erfindung war es daher, den Kommutierungszeitpunkt des Motors so anzupassen, daß ein ganzzahliges Verhältnis zwischen der PWM- Trägerfrequenz und der Kommutierungsperiode erhalten bleibt. Dadurch kann die statische Genauigkeit der Drehzahlregelung stark erhöht und der SR-Motor auch in Anwendungen mit hoher Drehzahlgenauigkeit eingesetzt werden.

Zu diesem Zweck wird die gemessene Dauer einer Kommutierungsperiode **(5)** mittels des PTI-Gliedes **(6)** gefiltert und anschließend in eine PLL- Struktur **(7)** geführt. Außerdem wird die Differenz zwischen dem Timer für die Messung der Kommutierungsperiode (aus den Signalen der Positionssensoren) und einem frei laufenden Softwaretimer **(8)** gebildet. Diese Differenz wird anschließend ebenfalls gefiltert (PTI-Glied) und dann verstärkt (P-Glied).
Der so ermittelte Wert wird als Fehlerabweichung mit dem gefilterten Wert der Kommutierungsperiode addiert (7) und als Periodendauer für den frei laufenden Softwaretimer (8) verwendet. Entsprechend der gewählten Zeitkonstanten der PTI-Glieder und der Verstärkung innerhalb der PLL- Struktur (7) ergibt sich der für eine PLL typische Fang- und Haltebereich. Bei korrekter Parametrierung läuft der Softwaretimer (8) bereits nach wenigen Zyklen synchron zum Messtimer (5) und kann nun zur Einstellung der Kommutierungszeitpunkte verwendet werden (Bildung der Signale Strangfolge und PWM- Synch). Damit ist es möglich, die Kommutierungszeitpunkte der einzelnen Motorstränge des SR-Motors unabhängig von den Sensorsignalen in beide Richtungen mit hoher Genauigkeit zu verschieben.

Durch eine Korrektur der Ausschaltverschiebung **(9)** wird nun die angestrebte Anpassung des Verhältnisses von Kommutierungsperiode und PWM- Trägerfrequenz hergestellt. Dazu wird aus der Solldrehzahl die Periodendauer für eine Kommutierung berechnet (y = 1/x) und durch die Periodendauer der PWM- Einheit dividiert, Anschließend wird das nächsthöhere ganzzahlige Vielfache der PWM- Periode errechnet und die Differenz zur Sollperiodendauer ermittelt. Diese Differenz wird schließlich zur Anpassung der Ausschaltverschiebungszeit verwendet, wodurch nun der Kommutierungsvorgang immer mit dem Ende einer PWM- Periode eingeleitet wird.

Außerdem kann der Motorstrangregelkreis auch für weitere Funktionen in der SR-MotorSteuerung verwendet werden. So ist z.B. die sehr präzise Verschiebung der Ein- / und Ausschaltzeitpunkte auch die Grundlage für eine zusätzliche Optimierung des Wirkungsgrades und des Drehmomentverlaufes.

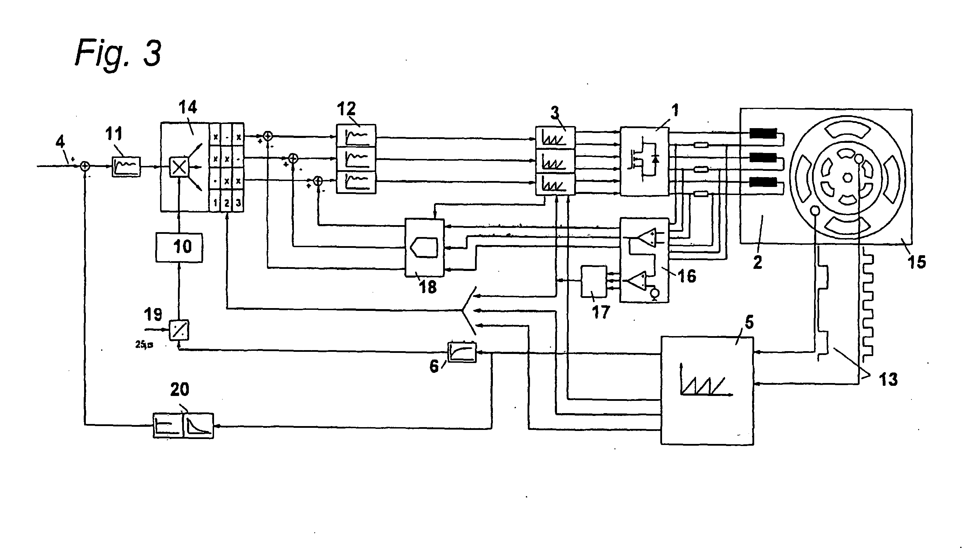

**Fig. 3** zeigt das Blockschaltbild der erfindungsgemäßen Stromformregelung zur Geräuschreduzierung.
Gleiche Komponenten wie in Fig. 2 sind wie dort beziffert.
Die Geräuschentwicklung ist ein wesentlicher Parameter zur Charakterisierung eines SR-Motors, weil bei diesen infolge des Arbeitsprinzips eine zyklische Verformung des Stators durch die Motorstrangschaltung auftritt. Neben konstruktiven Lösungsansätzen zur Verringerung dieser Geräuschursachen können auch steuerungstechnische Maßnahmen getroffen werden.
Zur erfindungsgemäßen Realisierung einer Verminderung der Geräuschentwicklung an SR-Motoren wird deshalb die Stromform im Bereich des Kommutierungsvorganges eingestellt.

Dazu wird die Periodendauer für eine Kommutierungsperiode des Motors mit Hilfe eines sehr genauen Zählers ( Auflösung 0,5µs) gemessen **(5)** . Anschließend wird dieser Wert durch ein PTI-Glied **(6)** gefiltert. Der so ermittelte Wert der Kommutierungsperiode wird anschließend durch die Abtastrate der Stromregelschleife **(19)** dividiert. Als Ergebnis erhält man die Anzahl der Regelschritte pro Kommutierungsperiode. Mit dieser Zahl, die zum Beginn einer neuen Kommutierung übernommen und gespeichert wird, läßt sich dann, aus einer zuvor offline ermittelten Tabelle **(10)** ein Korrekturfaktor für den Stromsollwert entnehmen.
Durch die Multiplikation dieses Faktors mit dem vorgegebenen Stromsollwert vom Drehzahlregler **(11)** erhält man den Sollwert für den unterlagerten Stromregelkreis **(12).**
Die Periodendauerbestimmung (5) liefert als Ausgangssignal außerdem die Strangfolge für die gewünschte Drehrichtung und synchronisiert diese gemäß der Lagegebersignale **(13)** . Diese Information wird ebenfalls im Sollwertgenerator **(14)** verarbeitet und der dort ermittelte Stromsollwert dem zugehörigen Motorstrangstromregler (12) zugeführt.

Der Aufbau der Korrekturtabelle (10) erfolgt optimal in der Form, daß die normierten Faktoren im Bereich von +1 bis -1 ( bzw. +1 bis 0 ) abgelegt werden. Der zu Beginn der Kommutierungsperiode übernommene Wert der Regelschritte wird mit den Korrekturfaktoren aus der Stromformtabelle (10) dekrementiert und als Index für das Auslesen der Korrekturfaktoren aus der Stromformtabelle verwendet. Um die Größe dieser Korrekturtabelle zu beschränken werden nur die Werte für die letzten n Regelschritte
(z.B. n = 10 ) einer Kommutierungsperiode hinterlegt. Alle davor liegenden Faktoren werden mit dem Wert +1 aus der Tabelle gelesen (Default) . Damit beschränkt sich die Größe der zu erstellenden Stromformtabelle und der Wirkungsbereich der Stromformregelung auf den Bereich des Stromabbaus vor der Kommutierung.
Dieser Bereich ist für die Verringerung der Geräusche im SR-Motor besonders wesentlich. Die Korrekturfaktoren der Stromformtabelle und deren Anzahl n können entsprechend des erforderlichen Drehzahlbereiches nachgeführt werden.

Für die Regelung der Stromform im höheren Drehzahlbereich wird während der Stromformkorrektur zusätzlich auch der untere Schalter des Brückenzweiges mit- geschaltet(hard switching). Dies erfolgt immer dann, wenn der Stromsollwert negativ wird (Korrekturfaktoren 0 bis - 1). Im Normalbetrieb des Motors bleibt der untere Schalter sonst dauerhaft eingeschalten, um die Stromwelligkeit gering zu halten (soft switching). Das Pulsen des unteren Schalters erfolgt ebenfalls pulsweitenmoduliert, wobei das Tastverhältnis vom Stromregler (12) vorgegeben wird. Der obere Schalter des Brückenzweiges ist in diesem Fall ausgeschalten.

### Besonderheiten:

- Einstellung der Stromform im Kommutierungsbereich über vordefinierte Tabellen möglich
- Asymmetrische Schalteransteuerung innerhalb eines Brückenzweiges zur genaueren Einstellung der Stromform bei hohen Drehzahlen
- Pulsweitenmodulation über den gesamten Drehzahlbereich

## Patentansprüche

1. Einrichtung zur Steuerung eines geschalteten Reluktanzmotors, der in einem hochtourigen Drehzahlbereich gefahren wird mit einer einfachen Positionserfassung mit zyklischer, grob winkelauflösender Signalfolge **dadurch gekennzeichnet,**
**dass** zwischen dem Rotorlagegeber **(15)** und der Kommutierung eine digitale PLL-Struktur **(7)** zwischengeordnet ist, die eine Hochauflösung der Positionsgeber-Signale und damit eine höhere Winkelauflösung erzeugt um so die im oberen Drehzahlbereich erforderliche drehzahl- abhängige Frühzündung zu realisieren, wobei eine Anpassung der Kommutierungsperiode an die PWM-Trägerfrequenz erfolgt, mit gleichzeitiger winkelgenauer Regelung der Stromform **(12)** unmittelbar vor dem Übergang zum nachfolgend bestromten Motorstrang, wobei dem Erreichen dieses hochtourigen Drehzahlbereichs, das Ausrichten beim Anlaufen des geschalteten Reluktanzmotors vorausgeht, welches durch rampenförmiges Ein- und Ausschalten des Ausrichtstromes **(Fig.1)** erfolgt.

2. Einrichtung zur Steuerung eines geschalteten Reluktanzmotors nach Anspruch 1
**dadurch gekennzeichnet,**
**dass** bei einer fest eingestellten Drehzahl eine Anpassung der Kommutierungsperiode an die PWM-Trägerfrequenz so vorgenommen wird, dass ein ganzzahliges Verhältnis zwischen der PWM-Trägerfrequenz und der Kommutierungsperiode geschaffen wird.

3. Einrichtung zur Steuerung eines geschalteten Reluktanzmotors nach Anspruch 1
**dadurch gekennzeichnet,**
**dass** das Ausrichten des Rotors in 2 Schritten mit aufeinanderfolgender Bestromung von 2 Strängen erfolgt, deren erster Schritt ein Vorausrichten über einen Benachbarten des auszurichtenden Motorstranges ist, um im 2. Schritt die Drehmomentbildung hin zum auszurichtenden Motorstrang zu gewährleisten **(Fig.1).**

## Claims

1. Device for the control of a switched reluctance motor which is run at a high-revolution range, with a simple position recording with cyclically coarsely angle-resolving signal sequence, **characterized in that** between the rotor positions sensor **(15)** and the commutation a digital PLL structure **(7)** is arranged which generates a high resolution of the position sensor signals and thereby a higher angular resolution to thereby realize the speed-dependent advanced ignition required in the upper speed range, whereby an adaptation of the commutation period on the PWM carrier frequency occurs, with simultaneous exact angular regulation of the current shape **(12)** immediately before the transition to the subsequently current-supplied motor branch, whereby reaching this high-revolution speed range is preceded by the alignment during the startup of the switched reluctance motor which occurs through ramp-shaped switch-on and switch-off of the standstill current **(Fig. 1).**

2. Device for the control of a switched reluctance motor according to claim 1, **characterized in that** at a fixed speed an adaptation of the commutation period to the PWM carrier frequency is made in a manner that an integral ratio between the PWM carrier frequency and the commutation period is created.

3. Device for the control of a switched reluctance motor according to claim 1, **characterized in that** the alignment of the rotor takes place in 2 steps with consecutive current supply of 2 branches, where their first step is a preliminary alignment through an adjacent motor branch to be aligned, to ensure the torque generation in the 2nd step toward the motor branch to be aligned **(Fig. 1).**

## Revendications

1. Dispositif de commande d'un moteur à réluctance commuté, fonctionnant en régime élevé, équipé d'un détecteur de position simple à séquence de signaux cyclique à résolution angulaire grossière, **caractérisé en ce qu'**une structure PLL numérique **(7)** est intercalée entre le détecteur de position du rotor **(15)** et le dispositif de commutation, structure qui produit une haute résolution des signaux du détecteur de position et qui augmente ainsi la résolution angulaire nécessaire à réaliser le démarrage avancé en fonction de la vitesse de rotation, la période de commutation étant adaptée à la fréquence porteuse du modulateur de largeur d'impulsion (PWM), la forme du courant **(12)** étant réglée à un angle précis, simultanément, et directement avant la transition vers la phase du moteur mise sous tension au suivant, l'alignement du moteur a réluctance commuté au démarrage s'effectuant par l'activation et la désactivation du courant d'alignement en forme de rampe **(Fig. 1)** avant d'atteindre le régime élevé.

2. Dispositif de commande d'un moteur à réluctance commuté selon la revendication 1, **caractérisé en ce que** l'adaptation de la période de commutation à la fréquence porteuse PWM s'effectue à une vitesse de rotation réglée au fixe de façon à créer un rapport à nombres entiers entre la fréquence porteuse PWM et la période de commutation.

3. Dispositif de commande d'un moteur à réluctance commuté selon la revendication 1,
**caractérisé en ce que** l'alignement du rotor s'effectue en 2 étapes, par une alimentation successive de 2 phases, dont la première étape est l'alignement préliminaire via une phase avoisinante à la phase à aligner afin de garantir en 2^{ème} étape la formation du couple envers la phase du moteur à aligner **(Fig. 1)**.
